# EUROPEAN PATENT APPLICATION

(11) **EP 2 667 521 A1**
(43) Date of publication of application: **27.11.2013**
(21) Application number: 12755512.6
(22) Date of filing: 09.03.2012
(51) Int. Cl.: H04B 7/04, H04W 88/08

(54) **METHOD AND SYSTEM FOR TRANSMITTING COMMUNICATION SIGNAL**

(30) Priority: 09.03.2011 CN 201110057022
(71) Applicant: Huawei Technologies Co., Ltd., Shenzhen, Guangdong 518129 (CN)
(72) Inventor: YAO, Guoqiang, Shenzhen Guangdong 518129 (CN)
(74) Representative: Körber, Martin Hans
(86) International application number: PCT/CN2012/072131
(87) International publication number: WO 2012/119565

(57) **Abstract**

Embodiments of the present invention disclose a method and a system for transmitting a communication signal, relates to the field of communications, and can improve receiving performance of a base station while enlarging coverage of the base station. The method of the present invention includes: receiving, by a baseband unit, main and diversity baseband uplink digital signals output by at least two radio remote units, where the at least two radio remote units are radio remote units to which different site addresses in a same cell correspond, one cell includes at least two radio remote units, and each radio remote unit corresponds to a different site address and at least one pair of main and diversity antennas, receives a radio signal through a corresponding main and diversity antenna, and outputs a main and diversity baseband uplink digital signal; performing combination calculation on the main and diversity baseband uplink digital signals output by the at least two radio remote units to obtain a combined baseband uplink digital signal; and performing baseband processing on the combined baseband uplink digital signal. The embodiments of the present invention are mainly applied to the process of mobile communication by a user on a high-speed railway.

## Description

### CROSS-REFERENCE TO RELATED APPLICATION

This application claims priority to Chinese Patent Application No. 201110057022.8, filed with the Chinese Patent Office on March 9, 2011 and entitled "METHOD AND SYSTEM FOR TRANSMITTING COMMUNICATION SIGNAL", which is incorporated herein by reference in its entirety.

### TECHNICAL FIELD

The present invention relates to the field of communications, and in particular, to a method and a system for transmitting a communication signal.

### BACKGROUND

With the social and economic development, the work and life pace of people is increasingly fast. To adapt to the need of fast-paced work and life of people, various kinds of fast transportation solutions arise on a global scale, where high-speed railway is the most representative land fast transportation. High-speed railway or expressway poses a challenge to mobile communication while it brings efficient work and life to people. Affected by factors, such as radio signal attenuation caused by frequent handovers, fast/slow fading, the Doppler effect, and vehicle body material in a fast-speed movement process, network performance and user experience deteriorate obviously.

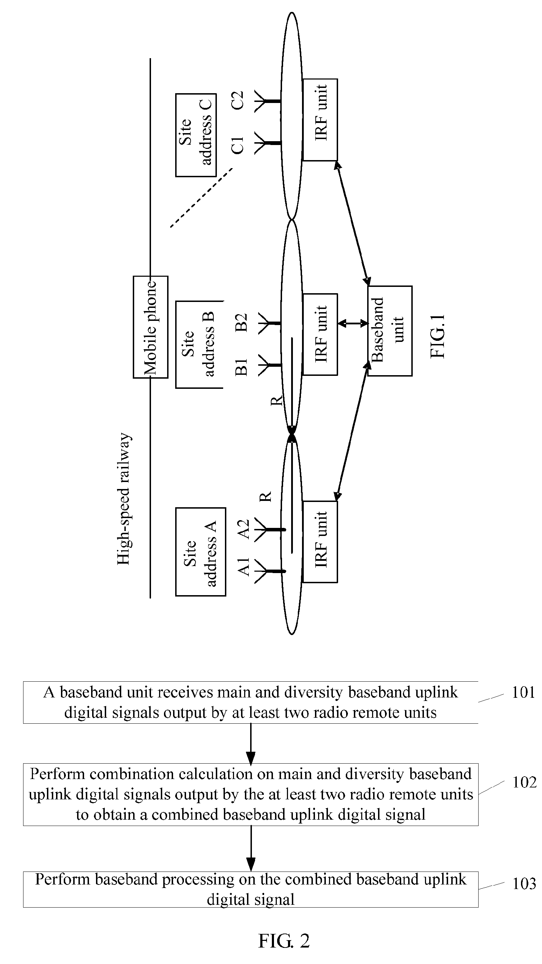

To adapt to high-speed mobility of a moving user, mobile communication currently adopts the following solution to transmit a signal for the high-speed moving user. A first solution is, as shown in FIG. 1, for example, to set a base station along a high-speed railway. The base station includes at least two IRF (intermediate radio frequency) units, where each IRF unit corresponds to a pair of main and diversity antennas and a single site address (for example, site address A, site address B, or site address C). After a mobile phone signal experiences radio frequency channel filtering, amplification, frequency mixing, analog-to-digital conversion, and digital down conversion, an IRF unit outputs an uplink main and diversity baseband data signal to a baseband unit, and the baseband unit performs 2-antenna diversity combination calculation on uplink baseband data signals of two antennas output by the IRF unit, so as to obtain combined baseband data. In the solution, because uplink received data of each carrier in a cell is calculated according to data received by main and diversity antennas of a single site address, the uplink received signal anti-interference capability of a base station is weak, and for a base station at a cell coverage edge, the uplink signal quality is poor, a bit error ratio of the signal received by the base station is high, and user experience is poor.

### SUMMARY

Embodiments of the present invention provides a method and a system for transmitting a communication signal, which can improve receiving performance of a base station while enlarging co-cell base station coverage.

To achieve the foregoing objectives, the embodiments of the present invention adopt the following technical solutions:
In one aspect, an embodiment of the present invention provides a method for transmitting a communication signal, including:
   receiving, by a baseband unit, main and diversity baseband uplink digital signals output by at least two radio remote units, where the at least two radio remote units are radio remote units to which different site addresses in a same cell correspond;
   performing combination calculation on the main and diversity baseband uplink digital signals output by the at least two radio remote units to obtain a combined baseband uplink digital signal; and
   performing baseband processing on the combined baseband uplink digital signal.

In another aspect, an embodiment of the present invention provides a radio communication system, including at least two radio remote units and a baseband unit, where the at least two radio remote units are located in a same cell, and each radio remote unit corresponds to a different site address;
the at least two radio remote units are respectively configured to receive a radio signal and output a main and diversity baseband uplink digital signal; and
the baseband unit is configured to receive the main and diversity baseband uplink digital signals output by the at least two radio remote units, perform combination calculation on the main and diversity baseband uplink digital signals output by the at least two radio remote units to obtain a combined baseband uplink digital signal, and perform baseband processing on the combined baseband uplink digital signal.

In the technical solutions provided in the embodiments of the present invention, in a cell, by performing combination processing on main and diversity baseband uplink digital signals output by at least two radio remote units corresponding to different site addresses, a combined baseband uplink digital signal is obtained, thereby improving receiving performance of a base station and improving user experience.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic networking diagram of a communication signal transmission network in the prior art;
FIG. 2 is a flowchart of a method for transmitting a communication signal according to Embodiment 1 of the present invention;
FIG. 3 is a schematic networking diagram of a communication signal transmission network according to Embodiment 2 of the present invention;
FIG. 4 is a flowchart of a method for transmitting a communication signal according to Embodiment 1 of the present invention;
FIG. 5 is a schematic diagram of a user receiving a signal during a moving process in another method for transmitting a communication signal according to Embodiment 1 of the present invention;
FIG. 6 is a schematic networking diagram of a communication signal transmission network according to Embodiment 2 of the present invention;
FIG. 7 is a flowchart of a method for transmitting a communication signal according to Embodiment 2 of the present invention;
FIG. 8 is a flowchart of another method for transmitting a communication signal according to Embodiment 2 of the present invention;
FIG. 9 is a schematic networking diagram of a communication signal transmission network according to Embodiment 3 of the present invention;
FIG. 10 is a flowchart of a method for transmitting a communication signal according to Embodiment 3 of the present invention;
FIG. 11 is a flowchart of another method for transmitting a communication signal according to Embodiment 3 of the present invention;
FIG. 12 is a schematic networking diagram of a communication signal transmission network according to Embodiment 4 of the present invention;
FIG. 13 is a flowchart of a method for transmitting a communication signal according to Embodiment 4 of the present invention;
FIG. 14 is a flowchart of another method for transmitting a communication signal according to Embodiment 4 of the present invention; and
FIG. 15 is a schematic structural diagram of a radio communication system according to Embodiment 5 of the present invention.

### DESCRIPTION OF EMBODIMENTS

The following clearly and describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

An embodiment of the present invention provides a method for transmitting a communication signal. As shown in FIG. 2, the method includes:
101: A baseband unit receives main and diversity baseband uplink digital signals output by at least two radio remote units, where the at least two radio remote units are radio remote units to which different site addresses in a same cell correspond. The cell includes at least two radio remote units, where each radio remote unit corresponds to a different site address and at least one pair of main and diversity antennas, receives a radio signal through a corresponding main and diversity antenna, and outputs a main and diversity baseband uplink digital signal.
102: Perform combination calculation on the main and diversity baseband uplink digital signals output by the at least two radio remote units to obtain a combined baseband uplink digital signal.

A method for performing combination calculation on the main and diversity baseband uplink digital signals output by the at least two radio remote units may adopt any one of the methods in the prior art, which is not limited in the embodiment of the present invention.
103: Perform baseband processing on the combined baseband uplink digital signal.

The performing baseband processing on the combined baseband uplink digital signal may be implemented by adopting any one of the baseband processing methods in the prior art, which is not limited in the embodiment of the present invention. Performing baseband processing on the combined baseband uplink digital signal may be, but is not limited to, baseband processing such as demodulation and decoding.

In the embodiment of the present invention, in a cell, by performing combination processing on main and diversity baseband uplink digital signals output by at least two radio remote units corresponding to different site addresses, a combined baseband uplink digital signal is obtained, thereby improving receiving performance of a base station and improving user experience.

### Embodiment 2

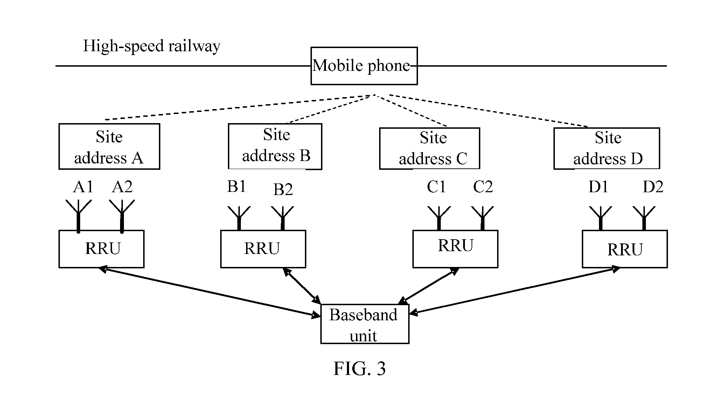

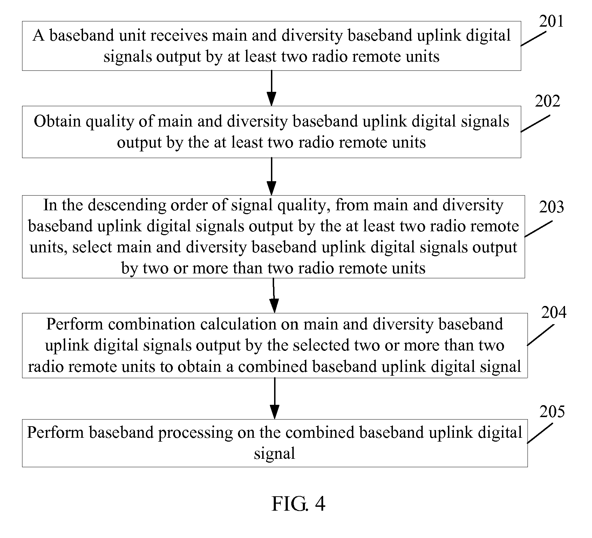

An embodiment of the present invention provides a method for transmitting a commutation signal. The architecture of a radio communication network for the commutation signal transmission is shown in FIG. 3. Along a high-speed railway, a cell (baseband unit) that provides a service for a high-speed moving user is set. The number of cells to be set may be determined according to the mileage of the high-speed railway and the coverage of a cell. In each cell, at least two RRUs (Radio Remote Unit, radio remote unit) are set (as shown in the figure, 4 radio remote units are set). Each radio remote unit corresponds to a different site address (as shown in the figure, site address A, site address B, site address C, and site address D), and corresponds to at least one pair of main and diversity antennas (as shown in the figure, each radio remote unit respectively corresponds to one pair of main and diversity antennas A1, A2; B1, B2; C1, C2; D1, D2), receives a radio signal through a corresponding main and diversity antenna, and outputs a main and diversity baseband uplink digital signal. The at least two radio remote units are, in a star manner, respectively connected to the baseband unit. The baseband unit and the at least two radio remote units compose a multi-site-address co-cell radio communication network in a star connection manner. In such a radio communication network, a method for transmitting a communication signal is shown in FIG. 4. The method includes:
201: A baseband unit receives main and diversity baseband uplink digital signals output by at least two radio remote units.
202: Obtain quality of the main and diversity baseband uplink digital signals output by the at least two radio remote units.

The quality of the main and diversity baseband uplink digital signals may be determined according to a signal-to-noise ratio and a signal amplitude size. A specific determining method may adopt any one of the methods in the prior art, which is not limited in the embodiment of the present invention.
203: In a descending order of the signal quality, from the main and diversity baseband uplink digital signals output by the at least two radio remote units, select main and diversity baseband uplink digital signals output by more than two radio remote units.

Specifically, baseband uplink digital signals may be selected according to a calculation capability of the baseband unit. For example, when the baseband unit adopts four-antenna diversity combination to implement processing of a combined baseband uplink digital signal, in the descending order of the signal quality, from the main and diversity baseband uplink digital signals output by the at least two radio remote units, the baseband unit selects main and diversity baseband uplink digital signals output by two radio remote units.

Furthermore, when a mobile user is moving at a high speed, the location of the user changes, and quality of an uplink signal received by a main and diversity antenna to which each site address corresponds changes. When selecting a main and diversity baseband uplink digital signal of relatively good signal quality, according to location information of the user, main and diversity baseband uplink digital signals output by more than two radio remote units are dynamically selected, specifically including:
obtaining location information of a user in a cell; and according to the location information, and in the descending order of the signal quality, from the main and diversity baseband uplink digital signals output by the at least two radio remote units, selecting main and diversity baseband uplink digital signals output by more than two radio remote units.

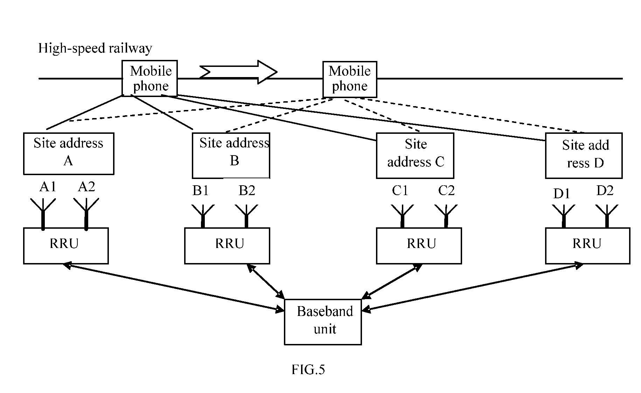

For example, as shown in FIG. 5, when a user moves between site address A and site address B, uplink signals received by main and diversity antennas A1, A2 and B1, B2 are of the best quality, and the baseband unit selects A1, A2, B1, B2 for performing uplink antenna combination calculation, that is, the baseband unit receives main and diversity baseband uplink digital signals output by radio remote unit 1 and radio remote unit 2. When the mobile user moves between site addresses B and C, uplink signals received by main and diversity antennas B1, B2 and C1, C2 are of the best quality, and the baseband unit selects B1, B2, C1, and C2 for performing uplink antenna combination calculation, that is, the baseband unit receives main and diversity baseband uplink digital signals output by radio remote unit 2 and radio remote unit 3. With the moving of the mobile user, the selecting main and diversity baseband uplink digital signals by the baseband unit is conducted in a similar way according to the foregoing mode, which will not be described one by one in the embodiment of the present invention.
204: Perform combination calculation on the main and diversity baseband uplink digital signals output by the selected more than two radio remote units to obtain a combined baseband uplink digital signal.

A method for performing combination calculation on the main and diversity baseband uplink digital signals output by the selected more than two radio remote units may adopt any one of the methods in the prior art, which is not limited in the embodiment of the present invention.
205: Perform baseband processing on the combined baseband uplink digital signal.

The performing baseband processing on the combined baseband uplink digital signal may be implemented by adopting any one of the baseband processing methods in the prior art, which is not limited in the embodiment of the present invention. Performing baseband processing on the combined baseband uplink digital signal may be, but is not limited to, baseband processing such as demodulation and decoding.

In the embodiment of the present invention, in a multi-site-address co-cell radio communication network in a star connection manner, by performing combination processing on main and diversity baseband uplink digital signals output by at least two radio remote units corresponding to different site addresses, a combined baseband uplink digital signal is obtained, thereby improving receiving performance of a base station, improving user experience, and to some extent enlarging the valid coverage of a cell. Furthermore, because the valid coverage of a cell is enlarged, when a mobile user is moving at a high speed in a cell, which is set to include at least two different site addresses, along a high-speed railway, cell handovers do not need to be frequently performed, thereby avoiding a defect of data bit error caused by frequent cell handovers to the mobile user.

In addition, in the embodiment of the present invention, after receiving main and diversity baseband uplink digital signals output by at least two radio remote units, main and diversity baseband uplink digital signals of relatively good signal quality can be dynamically selected for performing combination calculation, thereby enhancing interference immunity of a base station and improving user experience while reducing base station calculation complexity.

### Embodiment 3

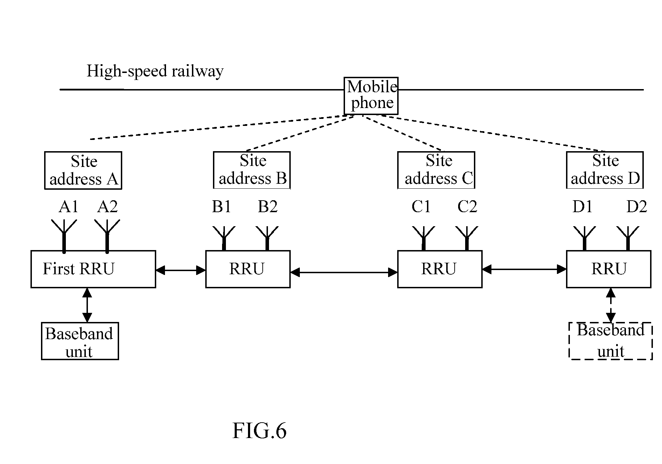

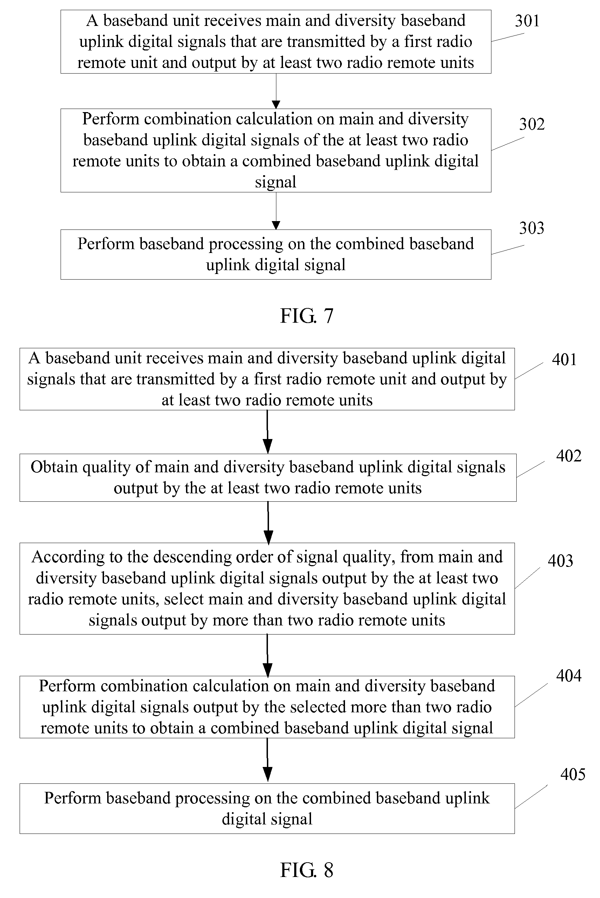

An embodiment of the present invention provides a method for transmitting a commutation signal. The architecture of a radio communication network for the commutation signal transmission is shown in FIG. 6. Along a high-speed railway, a cell (baseband unit) that provides a service for a high-speed moving user is set. The number of cells to be set may be determined according to the mileage of the high-speed railway and the coverage of a cell. In each cell, at least two RRUs are set (as shown in the figure, 4 radio remote units are set). Each radio remote unit corresponds to a different site address (as shown in the figure, site address A, site address B, site address C, and site address D), and corresponds to at least one pair of main and diversity antennas (as shown in the figure, each radio remote unit respectively corresponds to one pair of main and diversity antennas A1, A2; B1, B2; C1, C2; D1, D2), receives a radio signal through a corresponding main and diversity antenna, and outputs a main and diversity baseband uplink digital signal. A first radio remote unit among the at least two radio remote units is directly connected to a baseband unit. The first radio remote unit may be a first radio remote unit (as shown in the figure), and may also be a last radio remote unit (as shown in the dotted-line part in the figure). Among the at least two radio remote units, except the first radio remote unit, another radio remote unit is connected to the first radio remote unit in a cascading manner. The baseband unit and the at least two radio remote units compose a multi-site-address co-cell radio communication network in a single-channel cascading manner. In such a radio communication network, a method for transmitting a communication signal is shown in FIG. 7. The method includes:
301: A baseband unit receives main and diversity baseband uplink digital signals that are transmitted by a first radio remote unit and output by at least two radio remote units.

It should be noted that in the network, except the first radio remote unit, another radio remote unit, after receiving a radio frequency signal through a main and diversity antenna, processes the received radio frequency signal to obtain a main and diversity baseband uplink digital signal; after obtaining the main and diversity baseband uplink digital signal, a radio remote unit outputs the main and diversity baseband uplink digital signal to a preceding radio remote unit, so that the preceding radio remote unit forwards the main and diversity baseband uplink digital signal to the first radio remote unit.
302: Perform combination calculation on the main and diversity baseband uplink digital signals of the at least two radio remote units to obtain a combined baseband uplink digital signal.

A method for performing combination calculation on the main and diversity baseband uplink digital signals output by the at least two radio remote units may adopt any one of the methods in the prior art, which is not limited in the embodiment of the present invention.
303: Perform baseband processing on the combined baseband uplink digital signal.

The performing baseband processing on the combined baseband uplink digital signal may be implemented by adopting any one of the baseband processing methods in the prior art, which is not limited in the embodiment of the present invention. Performing baseband processing on the combined baseband uplink digital signal may be, but is not limited to, baseband processing such as demodulation and decoding.

In the embodiment of the present invention, in a multi-site-address co-cell radio communication network in a single-channel cascading manner, by performing combination processing on main and diversity baseband uplink digital signals output by at least two radio remote units corresponding to different site addresses, a combined baseband uplink digital signal is obtained, thereby improving receiving performance of a base station, improving user experience, and to some extent enlarging the valid coverage of a cell. Furthermore, because the valid coverage of a cell is enlarged, when a mobile user is moving at a high speed in a cell, which is set to include at least two different site addresses, along a high-speed railway, cell handovers do not need to be frequently performed, thereby avoiding a defect of data bit error caused by frequent cell handovers to the mobile user.

Furthermore, in order to enhance interference immunity of a base station while reducing base station calculation complexity, the embodiment of the present invention further provides a method for transmitting a communication signal. As shown in FIG. 8, the method includes:
401: A baseband unit receives main and diversity baseband uplink digital signals that are transmitted by a first radio remote unit and output by at least two radio remote units.

It should be noted that in the network, except the first radio remote unit, another radio remote unit, after receiving a radio frequency signal through a main and diversity antenna, processes the received radio frequency signal to obtain a main and diversity baseband uplink digital signal; after obtaining the main and diversity baseband uplink digital signal, a radio remote unit outputs the main and diversity baseband uplink digital signal to a preceding radio remote unit, so that the preceding radio remote unit forwards the main and diversity baseband uplink digital signal to the first radio remote unit.
402: Obtain quality of the main and diversity baseband uplink digital signals output by the at least two radio remote units.

The quality of the main and diversity baseband uplink digital signals may be determined according to a signal-to-noise ratio and a signal amplitude size. A specific determining method may adopt any one of the methods in the prior art, which is not limited in the embodiment of the present invention.
403: In a descending order of the signal quality, from the main and diversity baseband uplink digital signals output by the at least two radio remote units, select main and diversity baseband uplink digital signals output by more than two radio remote units.

Specifically, baseband uplink digital signals may be selected according to a calculation capability of the baseband unit. For example, when the baseband unit adopts four-antenna diversity combination to implement processing of a combined baseband uplink digital signal, in the descending order of the signal quality, from the main and diversity baseband uplink digital signals sent by the at least two radio remote units, the baseband unit selects main and diversity baseband uplink digital signals output by two radio remote units.

For a detailed description of the in the descending order of the signal quality, from the main and diversity baseband uplink digital signals sent by the at least two radio remote units, selecting main and diversity baseband uplink digital signals output by more than two radio remote units, reference may be made to the corresponding description in step 203 in Embodiment 2, which is not described again in the embodiment of the present invention.
404: Perform combination calculation on the main and diversity baseband uplink digital signals output by the selected more than two radio remote units to obtain a combined baseband uplink digital signal.

A method for performing combination calculation on the main and diversity baseband uplink digital signals output by the at least two radio remote units may adopt any one of the methods in the prior art, which is not limited in the embodiment of the present invention.
405: Perform baseband processing on the combined baseband uplink digital signal.

The performing baseband processing on the combined baseband uplink digital signal may be implemented by adopting any one of the baseband processing methods in the prior art, which is not limited in the embodiment of the present invention. Performing baseband processing on the combined baseband uplink digital signal may be, but is not limited to, baseband processing such as demodulation and decoding.

In the embodiment of the present invention, in a multi-site-address co-cell radio communication network in a single-channel cascading manner, by performing combination processing on main and diversity baseband uplink digital signals output by at least two radio remote units corresponding to different site addresses, a combined baseband uplink digital signal is obtained, thereby improving receiving performance of a base station, improving user experience, and to some extent enlarging the valid coverage of a cell. Furthermore, because the valid coverage of a cell is enlarged, when a mobile user is moving at a high speed in a cell, which is set to include at least two different site addresses, along a high-speed railway, cell handovers do not need to be frequently performed, thereby avoiding a defect of data bit error caused by frequent cell handovers to the mobile user.

In addition, in the embodiment of the present invention, after receiving main and diversity baseband uplink digital signals of at least two radio remote units, main and diversity baseband uplink digital signals of relatively good signal quality can be dynamically selected for performing combination calculation, thereby enhancing interference immunity of a base station and improving user experience while reducing base station calculation complexity. In addition, the embodiment of the present invention adopts a cascading manner for networking, thereby reducing the cost of communication signal transmission.

### Embodiment 4

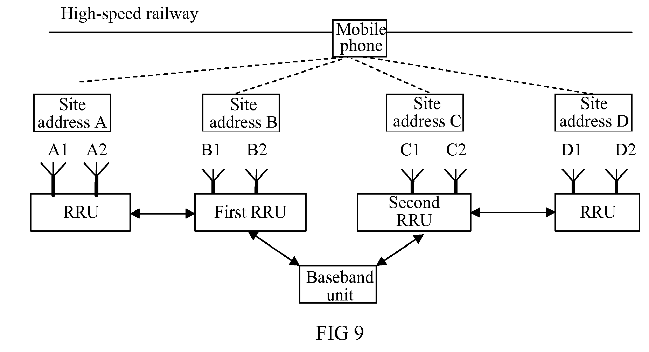

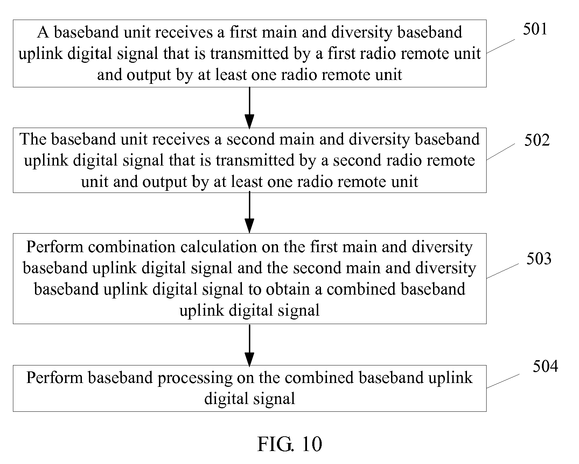

An embodiment of the present invention provides a method for transmitting a commutation signal. The architecture of a radio communication network for the commutation signal transmission is shown in FIG. 9. Along a high-speed railway, a cell (baseband unit) that provides a service for a high-speed moving user is set. The number of cells to be set may be determined according to the mileage of the high-speed railway and the coverage of a cell. In each cell, at least two RRUs are set (as shown in the figure, 4 radio remote units are set). Each radio remote unit corresponds to a different site address (as shown in the figure, site address A, site address B, site address C, and site address D), and corresponds to at least one pair of main and diversity antennas (as shown in the figure, each radio remote unit respectively corresponds to one pair of main and diversity antennas A1, A2; B1, B2; C1, C2; D1, D2), receives a radio signal through a corresponding main and diversity antenna, and outputs a main and diversity baseband uplink digital signal. A first radio remote unit among the at least two radio remote units is directly connected to a baseband unit. A second radio remote unit among at least two radio remote units is also directly connected to the baseband unit. Among the at least two radio remote units, except the first radio remote unit and the second radio remote unit, another radio remote unit is connected to the first radio remote unit or the second radio remote unit in a cascading manner. The baseband unit and the at least two radio remote units compose a multi-site-address co-cell radio communication network in a two-channel cascading and star hybrid connection manner. In such a radio communication network, a method for transmitting a communication signal is shown in FIG. 10. The method includes:
501: A baseband unit receives a first main and diversity baseband uplink digital signal that is transmitted by a first radio remote unit and output by at least one radio remote unit, where among the at least one radio remote unit, except the first radio remote unit, another radio remote unit is connected to the first radio remote unit in a cascading manner.

It should be noted that, a radio remote unit cascaded to the first radio remote unit, after receiving a radio frequency signal through a main and diversity antenna, processes the radio frequency signal to obtain a first main and diversity baseband uplink digital signal; after obtaining the first main and diversity baseband uplink digital signal, the radio remote unit outputs the first main and diversity baseband uplink digital signal to its preceding radio remote unit, so that the preceding radio remote unit outputs the main and diversity baseband uplink digital signal to the first radio remote unit.
502: The baseband unit receives a second main and diversity baseband uplink digital signal that is transmitted by a second radio remote unit and output by at least one radio remote unit, where among the at least one radio remote unit, except the second radio remote unit, another radio remote unit is connected to the second radio remote unit in a cascading manner.

It should be noted that, a radio remote unit connected to the second radio remote unit, after receiving a radio frequency signal through a main and diversity antenna, processes the radio frequency signal to obtain a second main and diversity baseband uplink digital signal; after obtaining the second main and diversity baseband uplink digital signal, the radio remote unit outputs the second main and diversity baseband uplink digital signal to its preceding radio remote unit, so that the preceding radio remote unit outputs the main and diversity baseband uplink digital signal to the second radio remote unit.
503: Perform combination calculation on the first main and diversity baseband uplink digital signal and the second main and diversity baseband uplink digital signal to obtain a combined baseband uplink digital signal.

When combination calculation is performed on the first main and diversity baseband uplink digital signal and the second main and diversity baseband uplink digital signal, any one of the methods in the prior art may be adopted for implementation, which is not limited in the embodiment of the present invention.
504: Perform baseband processing on the combined baseband uplink digital signal.

The performing baseband processing on the combined baseband uplink digital signal may be implemented by adopting any one of the baseband processing methods in the prior art, which is not limited in the embodiment of the present invention. Performing baseband processing on the combined baseband uplink digital signal may be, but is not limited to, baseband processing such as demodulation and decoding.

It should be noted that, when a baseband unit receives baseband uplink digital signals output by at least two radio remote units, the baseband unit may receive signals as described in the step 501 and step 502, the baseband unit may also receive from only a first radio remote unit baseband uplink digital signals output by at least two radio remote units, or the baseband unit may also receive from only a second radio remote unit baseband uplink digital signals output by at least two radio remote units, which is not limited in the embodiment of the present invention, and is determined according to signal quality of a user equipment during a specific implementation.

In the embodiment of the present invention, in a multi-site-address co-cell radio communication network in a two-channel cascading and star hybrid connection manner, by performing combination processing on main and diversity baseband uplink digital signals output by at least two radio remote units corresponding to different site addresses, a combined baseband uplink digital signal is obtained, thereby improving receiving performance of a base station, improving user experience, and to some extent enlarging the valid coverage of a cell. Furthermore, because the valid coverage of a cell is enlarged, when a mobile user is moving at a high speed in a cell, which is set to include at least two different site addresses, along a high-speed railway, cell handovers do not need to be frequently performed, thereby avoiding a defect of data bit error caused by frequent cell handovers to the mobile user.

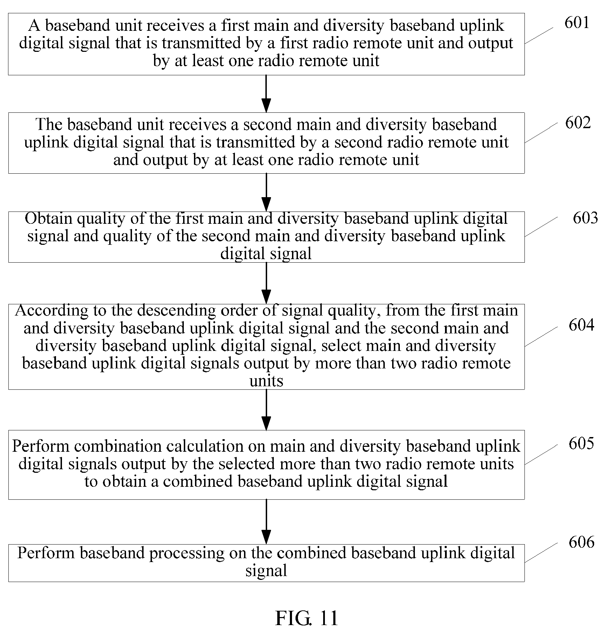

Furthermore, in order to enhance interference immunity of a base station while reducing base station calculation complexity, the embodiment of the present invention further provides a method for transmitting a communication signal. As shown in FIG. 11, the method includes:
601: A baseband unit receives a first main and diversity baseband uplink digital signal that is transmitted by a first radio remote unit and output by at least one radio remote unit, where among the at least one radio remote unit, except the first radio remote unit, another radio remote unit is connected to the first radio remote unit in a cascading manner.
602: The baseband unit receives a second main and diversity baseband uplink digital signal that is transmitted by a second radio remote unit and output by at least one radio remote unit, where among the at least one radio remote unit, except the second radio remote unit, another radio remote unit is connected to the second radio remote unit in a cascading manner.
603: Obtain quality of the first main and diversity baseband uplink digital signal and quality of the second main and diversity baseband uplink digital signal.

The quality of the main and diversity baseband uplink digital signals may be determined according to a signal-to-noise ratio and a signal amplitude size. A specific determining method may adopt any one of the methods in the prior art, which is not limited in the embodiment of the present invention.
604: In a descending order of the signal quality, from the first main and diversity baseband uplink digital signal and the second main and diversity baseband uplink digital signal, select main and diversity baseband uplink digital signals output by more than two radio remote units.

Specifically, baseband uplink digital signals may be selected according to a calculation capability of the baseband unit. For example, when the baseband unit adopts four-antenna diversity combination to implement processing of a combined baseband uplink digital signal, in the descending order of the signal quality, from the first main and diversity baseband uplink digital signal and the second main and diversity baseband uplink digital signal, the baseband unit selects main and diversity baseband uplink digital signals output by two radio remote units.

For a detailed description of the in the descending order of the signal quality, from the main and diversity baseband uplink digital signals sent by the at least two radio remote units, selecting main and diversity baseband uplink digital signals output by more than two radio remote units, reference may be made to the corresponding description in step 203 in Embodiment 2, which is not described again in the embodiment of the present invention.
605: Perform combination calculation on the main and diversity baseband uplink digital signals output by the selected more than two radio remote units to obtain a combined baseband uplink digital signal.

A method for performing combination calculation on the main and diversity baseband uplink digital signals output by the at least two radio remote units may adopt any one of the methods in the prior art, which is not limited in the embodiment of the present invention.
606: Perform baseband processing on the combined baseband uplink digital signal.

The performing baseband processing on the combined baseband uplink digital signal may be implemented by adopting any one of the baseband processing methods in the prior art, which is not limited in the embodiment of the present invention. Performing baseband processing on the combined baseband uplink digital signal may be, but is not limited to, baseband processing such as demodulation and decoding.

It should be noted that, when a baseband unit receives baseband uplink digital signals of at least two radio remote units, the baseband unit may receive signals as described in the step 601 and step 602, the baseband unit may also receive from only a first radio remote unit baseband uplink digital signals output by at least two radio remote units, and the baseband unit may further receive from only a second radio remote unit baseband uplink digital signals output by at least two radio remote units, which is not limited in the embodiment of the present invention, and is determined according to signal quality of a user equipment during a specific implementation.

In the embodiment of the present invention, in a multi-site-address co-cell radio communication network in a two-channel cascading and star hybrid connection manner, by performing combination processing on main and diversity baseband uplink digital signals output by at least two radio remote units corresponding to different site addresses, a combined baseband uplink digital signal is obtained, thereby improving receiving performance of a base station, improving user experience, and to some extent enlarging the valid coverage of a cell. Furthermore, because the valid coverage of a cell is enlarged, when a mobile user is moving at a high speed in a cell, which is set to include at least two different site addresses, along a high-speed railway, cell handovers do not need to be frequently performed, thereby avoiding a defect of data bit error caused by frequent cell handovers to the mobile user.

In addition, in the embodiment of the present invention, after receiving the first main and diversity baseband uplink digital signal and the second main and diversity baseband uplink digital signal, main and diversity baseband uplink digital signals of relatively good signal quality can be dynamically selected for performing combination calculation, thereby enhancing interference immunity of a base station and improving user experience while reducing base station calculation complexity.

### Embodiment 5

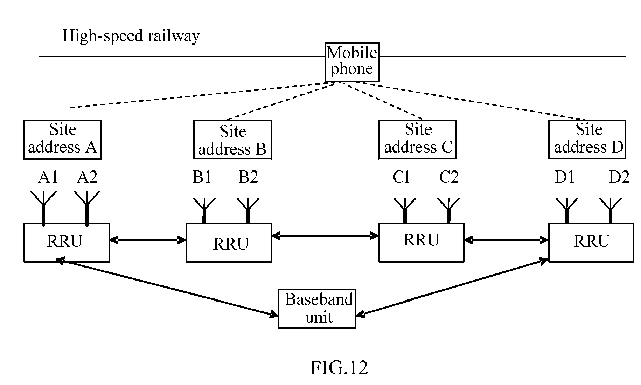

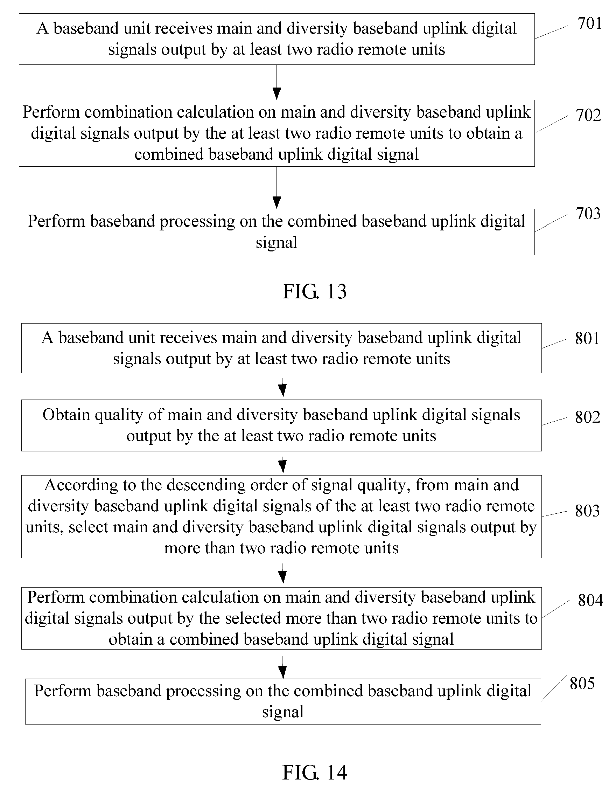

An embodiment of the present invention provides a method for transmitting a commutation signal. The architecture of a radio communication network for the commutation signal transmission is shown in FIG. 12. Along a high-speed railway, a cell (baseband unit) that provides a service for a high-speed moving user is set. The number of cells to be set may be determined according to the mileage of the high-speed railway and the coverage of a cell. In each cell, at least two RRUs are set (as shown in the figure, 4 radio remote units are set). Each radio remote unit corresponds to a different site address (as shown in the figure, site address A, site address B, site address C, and site address D), and corresponds to at least one pair of main and diversity antennas (as shown in the figure, each radio remote unit respectively corresponds to one pair of main and diversity antennas A1, A2; B1, B2; C1, C2; D1, D2), receives a radio signal through a corresponding main and diversity antenna, and outputs a main and diversity baseband uplink digital signal. The at least two radio remote units are connected to each other in a cascading manner, and the inter-cascaded at least two radio remote units are connected to the baseband unit in a ring manner. The baseband unit and the at least two radio remote units compose a multi-site-address co-cell radio communication network in a cascading and ring hybrid connection manner. In such a radio communication network, a method for transmitting a communication signal is shown in FIG. 13. The method includes:
701: A baseband unit receives main and diversity baseband uplink digital signals output by at least two radio remote units.

It should be noted that, because the network is a network based on a cascading and ring hybrid connection manner, when the baseband unit receives main and diversity baseband uplink digital signals of at least two radio remote units, the baseband unit may receive from any one of two radio remote units connected to the baseband unit main and diversity baseband uplink digital signals output by at least two radio remote units, and may also receive respectively from two radio remote units main and diversity baseband uplink digital signals output by at least one radio remote unit, which is not limited in the embodiment of the present invention, and may be specifically selected according to setting of a user during a specific implementation.
702: Perform combination calculation on the main and diversity baseband uplink digital signals output by the at least two radio remote units to obtain a combined baseband uplink digital signal.

Performing combination calculation on the main and diversity baseband uplink digital signals of the at least two radio remote units may adopt any one of the methods in the prior art, which is not limited in the embodiment of the present invention.
703: Perform baseband processing on the combined baseband uplink digital signal.

The performing baseband processing on the combined baseband uplink digital signal may be implemented by adopting any one of the baseband processing methods in the prior art, which is not limited in the embodiment of the present invention. Performing baseband processing on the combined baseband uplink digital signal may be, but is not limited to, baseband processing such as demodulation and decoding.

In the embodiment of the present invention, in a multi-site-address co-cell radio communication network in a cascading and ring hybrid connection manner, by performing combination processing on main and diversity baseband uplink digital signals output by at least two radio remote units corresponding to different site addresses, a combined baseband uplink digital signal is obtained, thereby improving receiving performance of a base station, improving user experience, and to some extent enlarging the valid coverage of a cell. Furthermore, because the valid coverage of a cell is enlarged, when a mobile user is moving at a high speed in a cell, which is set to include at least two different site addresses, along a high-speed railway, cell handovers do not need to be frequently performed, thereby avoiding a defect of data bit error caused by frequent cell handovers to the mobile user. In addition, the ring networking manner in the embodiment of the present invention can improve reliability of a multi-site-address co-cell network.

Furthermore, in order to enhance interference immunity of a base station while reducing base station calculation complexity, the embodiment of the present invention further provides a method for transmitting a communication signal. As shown in FIG. 14, the method includes:
801: A baseband unit receives main and diversity baseband uplink digital signals output by at least two radio remote units.

It should be noted that, because the network is a network based on a cascading and ring hybrid connection manner, when the baseband unit receives main and diversity baseband uplink digital signals of at least two radio remote units, the baseband unit may receive from any one of two radio remote units connected to the baseband unit main and diversity baseband uplink digital signals output by at least two radio remote units, and may also receive respectively from two radio remote units main and diversity baseband uplink digital signals output by at least one radio remote unit, which is not limited in the embodiment of the present invention, and may be specifically selected according to setting of a user during a specific implementation.
802: Obtain quality of the main and diversity baseband uplink digital signals output by the at least two radio remote units.

The quality of the main and diversity baseband uplink digital signals may be determined according to a signal-to-noise ratio and a signal amplitude size. A specific determining method may adopt any one of the methods in the prior art, which is not limited in the embodiment of the present invention.
803: In a descending order of the signal quality, from the main and diversity baseband uplink digital signals of the at least two radio remote units, select main and diversity baseband uplink digital signals output by more than two radio remote units.

Specifically, baseband uplink digital signals may be selected according to a calculation capability of the baseband unit. For example, when the baseband unit adopts four-antenna diversity combination to implement processing of a combined baseband uplink digital signal, in the descending order of the signal quality, from the main and diversity baseband uplink digital signals output by the at least two radio remote units, the baseband unit selects main and diversity baseband uplink digital signals output by two radio remote units.

For a detailed description of the in the descending order of the signal quality, from the main and diversity baseband uplink digital signals sent by the at least two radio remote units, selecting main and diversity baseband uplink digital signals output by more than two radio remote units, reference may be made to the corresponding description in step 303 in Embodiment 2, which is not described again in the embodiment of the present invention.
804: Perform combination calculation on the main and diversity baseband uplink digital signals output by the selected more than two radio remote units to obtain a combined baseband uplink digital signal.
805: Perform baseband processing on the combined baseband uplink digital signal.

In the embodiment of the present invention, in a multi-site-address co-cell radio communication network in a cascading and ring hybrid connection manner, by performing combination processing on main and diversity baseband uplink digital signals output by at least two radio remote units corresponding to different site addresses, a combined baseband uplink digital signal is obtained, thereby improving receiving performance of a base station, improving user experience, and to some extent enlarging the valid coverage of a cell. Furthermore, because the valid coverage of a cell is enlarged, when a mobile user is moving at a high speed in a cell, which is set to include at least two different site addresses, along a high-speed railway, cell handovers do not need to be frequently performed, thereby avoiding a defect of data bit error caused by frequent cell handovers to the mobile user.

In addition, in the embodiment of the present invention, after receiving main and diversity baseband uplink digital signals of at least two radio remote units, main and diversity baseband uplink digital signals of relatively good signal quality can be dynamically selected for performing combination calculation, thereby enhancing interference immunity of a base station and improving user experience while reducing base station calculation complexity. In addition, the ring networking manner in the embodiment of the present invention can improve reliability of a multi-site-address co-cell network.

### Embodiment 6

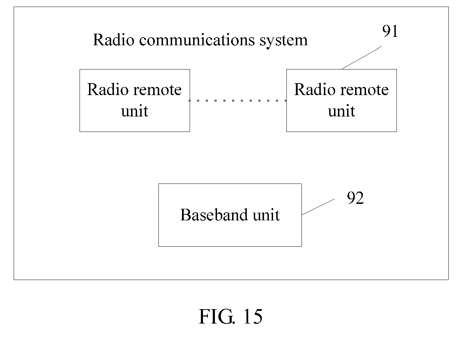

An embodiment of the present invention provides a radio communication system. As shown in FIG. 15, the radio communication system includes at least two radio remote units 91 and a baseband unit 92, where the at least two radio remote units 91 are located in a same cell, and each radio remote unit corresponds to a different site address and at least one pair of main and diversity antennas.

The at least two radio remote units 91 are respectively configured to receive a radio signal through a corresponding main and diversity antenna, and output a main and diversity baseband uplink digital signal.

The baseband unit 92 is configured to receive the main and diversity baseband uplink digital signals output by the at least two radio remote units 91, perform combination calculation on the main and diversity baseband uplink digital signals output by the at least two radio remote units 91 to obtain a combined baseband uplink digital signal, and perform baseband processing on the combined baseband uplink digital signal.

Furthermore, in order to enhance interference immunity of a base station while reducing base station calculation complexity, the baseband unit 92 is further configured to, after receiving the main and diversity baseband uplink digital signals output by the at least two radio remote units 91, obtain quality of the main and diversity baseband uplink digital signals output by the at least two radio remote units 91; in a descending order of the signal quality, from the main and diversity baseband uplink digital signals output by the at least two radio remote units, select main and diversity baseband uplink digital signals output by more than two radio remote units; and perform combination calculation on main and diversity baseband uplink digital signals output by the selected more than two radio remote units to obtain a combined baseband uplink digital signal. The quality of the main and diversity baseband uplink digital signals may be determined according to a signal-to-noise ratio and a signal amplitude size. A specific determining method may adopt any one of the methods in the prior art, which is not limited in the embodiment of the present invention.

The at least two radio remote units may be connected to the baseband unit by using any one of the following manners, including:

A first manner: The at least two radio remote units 91 are respectively connected to the baseband unit 92 in a star connection manner, which is specifically shown in FIG. 3. For a corresponding description, reference may be made to the corresponding description in Embodiment 2, which is not described again in the embodiment of the present invention.

A second manner: A first radio remote unit among the at least two radio remote units 91 is directly connected to the baseband unit 92; and among the at least two radio remote units 91, except the first radio remote unit, another radio remote unit is connected to the first radio remote unit in a cascading manner, which is specifically shown in FIG. 6. For a corresponding description, reference may be made to the corresponding description in Embodiment 3, which is not described again in the embodiment of the present invention.

A third manner: A first radio remote unit and a second radio remote unit among the at least two radio remote units 91 are respectively connected to the baseband unit 92; except the first radio remote unit and the second radio remote unit, another radio remote unit is respectively connected to the first radio remote unit or the second radio frequency unit in a cascading manner, which is specifically shown in FIG. 9. For a corresponding description, reference may be made to the corresponding description in Embodiment 4, which is not described again in the embodiment of the present invention.

A fourth manner: The at least two radio remote units 91 are connected to each other in a cascading manner, and the inter-cascaded at least two radio remote units are connected to the baseband unit 92 in a ring connection manner, which is specifically shown in FIG. 12. For a corresponding description, reference may be made to the corresponding description in Embodiment 5, which is not described again in the embodiment of the present invention.

In the embodiment of the present invention, in a cell, by performing combination processing on main and diversity baseband uplink digital signals output by at least two radio remote units corresponding to different site addresses, a combined baseband uplink digital signal is obtained, thereby improving receiving performance of a base station and improving user experience. Furthermore, because the valid coverage of a cell is enlarged, when a mobile user is moving at a high speed in a cell, which is set to include at least two different site addresses, along a high-speed railway, cell handovers do not need to be frequently performed, thereby avoiding a defect of data bit error caused by frequent cell handovers to the mobile user.

In addition, in the embodiment of the present invention, after receiving main and diversity baseband uplink digital signals output by at least two radio remote units, main and diversity baseband uplink digital signals of relatively good signal quality can be dynamically selected for performing combination calculation, thereby enhancing interference immunity of a base station and improving user experience while reducing base station calculation complexity.

It should be noted that, the technical solutions provided in the embodiment may further be applied to all multi-site-address co-cell design fields of a radio standard base station. A transmission medium is not limited to an optical fiber, a cable, or a micro wave. A networking manner is not limited to star, chain, ring, or a hybrid networking manner of these forms. The technical solutions provided in the embodiment, in addition to a high-speed railway, may further be applied to another high-speed traffic route, for example, an expressway.

Through the foregoing description of the implementation manners, it is clear to persons skilled in the art that the present invention may be implemented by software plus necessary universal hardware, and definitely may also be implemented by hardware, but in many cases, the software implementation is preferred. Based on such an understanding, the technical solutions of the present invention essentially, or the part contributing to the prior art may be implemented in the form of a software product. The computer software product is stored in a readable storage medium, for example, a floppy disk, a hard disk, or an optical disk of the computer, and includes several instructions for instructing a computer device (which may be a personal computer, a server, a network device, or the like) to perform the methods described in the embodiments of the present invention.

The foregoing descriptions are merely specific implementation manners of the present invention, but not intended to limit the protection scope of the present invention. Any variation or replacement made by persons skilled in the art within the technical scope disclosed in the present invention shall fall within the protection scope of the present invention. Therefore, the protection scope of the present invention shall be subject to the protection scope of the appended claims.

## Claims

1. A method for transmitting a communication signal, comprising:
receiving, by a baseband unit, main and diversity baseband uplink digital signals output by at least two radio remote units, wherein the at least two radio remote units are radio remote units to which different site addresses in a same cell correspond;
performing combination calculation on the main and diversity baseband uplink digital signals output by the at least two radio remote units to obtain a combined baseband uplink digital signal; and
performing baseband processing on the combined baseband uplink digital signal.

2. The method according to claim 1, after the receiving, by the baseband unit, main and diversity baseband uplink digital signals output by the at least two radio remote units, further comprising:
obtaining signal quality of the main and diversity baseband uplink digital signals output by the at least two radio remote units; and
in a descending order of the signal quality, from the main and diversity baseband uplink digital signals output by the at least two radio remote units, selecting main and diversity baseband uplink digital signals output by at least two radio remote units, wherein
the performing combination calculation on the main and diversity baseband uplink digital signals output by the at least two radio remote units to obtain a combined baseband uplink digital signal comprises: performing combination calculation on the main and diversity baseband uplink digital signals output by the at least two radio remote units selected in the descending order of the signal quality to obtain the combined baseband uplink digital signal.

3. The method according to claim 1, after the receiving, by the baseband unit, main and diversity baseband uplink digital signals output by the at least two radio remote units, further comprising:
obtaining location information of a user in the cell, and signal quality of the main and diversity baseband uplink digital signals output by the at least two radio remote units; and
according to the location information, and in a descending order of the signal quality, from the main and diversity baseband uplink digital signals output by the at least two radio remote units, selecting main and diversity baseband uplink digital signals output by at least two radio remote units.

4. The method according to claim 1, wherein each radio remote unit among the at least radio remote units corresponds to at least one pair of main and diversity antennas, and the main and diversity baseband uplink digital signal is a signal output by the main and diversity antenna.

5. The method according to claim 2 or 3 or 4, before the performing combination calculation on the main and diversity baseband uplink digital signals output by the selected at least two radio remote units, further comprising:
performing anti-interference processing on the main and diversity baseband uplink digital signals output by the selected at least two radio remote units.

6. The method according to claim 2 or 3, wherein the signal quality of the main and diversity baseband uplink digital signals is determined according to a signal-to-noise ratio or a signal amplitude size.

7. A radio communication system, comprising a baseband unit and at least two radio remote units, wherein the at least two radio remote units are located in a same cell, and each radio remote unit corresponds to a different site address;
the at least two radio remote units are respectively configured to receive a radio signal and output a main and diversity baseband uplink digital signal; and
the baseband unit is configured to receive the main and diversity baseband uplink digital signals output by the at least two radio remote units, perform combination calculation on the main and diversity baseband uplink digital signals output by the at least two radio remote units to obtain a combined baseband uplink digital signal, and perform baseband processing on the combined baseband uplink digital signal.

8. The system according to claim 7, wherein the baseband unit is further configured to: after receiving the main and diversity baseband uplink digital signals output by the at least two radio remote units, obtain signal quality of the main and diversity baseband uplink digital signals output by the at least two radio remote units; in a descending order of the signal quality, from the main and diversity baseband uplink digital signals output by the at least two radio remote units, select main and diversity baseband uplink digital signals output by at least two radio remote units; and perform combination calculation on the main and diversity baseband uplink digital signals output by the selected at least two radio remote units to obtain a combined baseband uplink digital signal.

9. The system according to claim 7, wherein the baseband unit is further configured to: after receiving the main and diversity baseband uplink digital signals output by the at least two radio remote units, obtain location information of a user in a cell, and signal quality of the main and diversity baseband uplink digital signals output by the at least two radio remote units; according to the location information, and in a descending order of the signal quality, select main and diversity baseband uplink digital signals output by at least two radio remote units.

10. The system according to claim 7, wherein the radio communication system further comprises at least two pairs of main and diversity antennas, and each radio remote unit among the at least radio remote units corresponds to at least one pair of main and diversity antennas.

11. The system according to any one of claims 7 to 10, wherein the baseband unit is further configured to: before performing combination calculation on the main and diversity baseband uplink digital signals output by the selected more than two radio remote units, perform anti-interference processing on the main and diversity baseband uplink digital signals output by the selected at least two radio remote units.

12. The system according to any one of claims 7 to 10, wherein:
the at least two radio remote units are, in a star connection manner, respectively connected to the baseband unit; or
a first radio remote unit among the at least two radio remote units is directly connected to the baseband unit, and among the at least two radio remote units, except the first radio remote unit, another radio remote unit is connected to the first radio remote unit in a cascading manner; or
a first radio remote unit and a second radio remote unit among the at least two radio remote units are respectively connected to the baseband unit, and among the at least two radio remote units, except the first radio remote unit and the second radio remote unit, another radio remote unit is respectively connected to the first radio remote unit or the second radio frequency unit in a cascading manner; or
the at least two radio remote units are connected to each other in a cascading manner, and the inter-cascaded at least two radio remote units are connected to the baseband unit in a ring connection manner.
